# EUROPÄISCHE PATENTANMELDUNG

(11) **EP 4 450 912 A1**
(43) Veröffentlichungstag der Anmeldung: **23.10.2024**
(21) Anmeldenummer: 23169277.3
(22) Anmeldetag: 21.04.2023
(51) Int. Cl.: F27B 1/02, C04B 2/12, F27B 1/10, F27B 1/26, F27D 17/00

(54) **ANLAGE UND VERFAHREN ZUM BRENNEN VON KALKSTEIN ZU BRANNTKALK**

(71) Anmelder: Scheuch Management Holding GmbH, 4971 Aurolzmünster (AT)
(72) Erfinder: LECHNER, Georg, 4920 Schildorn (AT); OBERMÜLLER, Patrick, 4972 Utzenaich (AT); HUEMER, Stefan, 4780 Schärding (AT); FELLNER, Thomas, 5145 Neukirchen an der Enknach (AT)
(74) Vertreter: SONN Patentanwälte GmbH & Co KG

(57) **Zusammenfassung**

Anlage (1) und Verfahren zum Brennen von Kalkstein zu Branntkalk, aufweisend:
einen Gleichstrom-Gegenstrom-Regenerativ-(GGR)-Ofen mit einem ersten Ofenschacht (4) und einem zweiten Ofenschacht (4), welche abwechselnd als Brennschacht zum Brennen von Rohmaterial und als Vorwärmschacht zum Vorwärmen von Rohmaterial betreibbar sind, und mit einem Überströmkanal (5) zwischen dem ersten (3) und dem zweiten Ofenschacht (4), über welchen Abgase vom Brennschacht in den Vorwärmschacht überführbar sind,
eine Abgas-Ableitung (6) zum Ableiten von Abgasen des GGR-Ofens,
eine Abgas-Reinigungsstufe (12) zum Reinigen der vom GGR-Ofen abgeleiteten Abgase, wobei die Abgas-Reinigungsstufe (12) zur Pufferung von Schwankungen der Temperatur der Abgase des GGR-Ofens (2) zumindest einen Regenerator (18) zum regenerativen Wärmeaustausch mit den vom GGR-Ofen (2) abgeleiteten Abgasen aufweist.

## Beschreibung

Aus der EP 2 478 314 B1 ist ein Gleichstrom-Gegenstrom-Regenerativ-Kalkofen (GGR-Kalkofen) zum Brennen von Kalkstein bekannt. Der GGR-Kalkofen besteht aus wenigstens zwei Schächten, die jeweils eine Vorwärmzone, eine Brennzone und eine Kühlzone aufweisen. Beide Schächte sind über einen Überströmkanal miteinander verbunden. Das zu brennende Material wird von oben in beide Schächte aufgegeben und unten als gebranntes Material abgezogen. Die Schächte werden abwechselnd als Brennschacht und Abgasschacht betrieben, wobei dem Brennschacht Verbrennungsluft im Gleichstrom mit dem Material und Brennstoff zugeführt wird und die dabei entstehenden heißen Abgase zusammen mit der von unten zugeführten, erwärmten Kühlluft über den Überströmkanal in den Abgasschacht geleitet werden, wo die Abgase im Gegenstrom zum Material nach oben abgeleitet werden und das Material dabei vorwärmen. Nach einer vorgegebenen Zeitspanne von beispielsweise 15 Minuten wird die Funktion der beiden Schächte vertauscht, d.h. der Brennschacht wird zum Abgasschacht und umgekehrt. Dieses Verfahren erlaubt ein sehr effizientes Brennen des Kalksteins im Gleichstrom mit den Verbrennungsgasen und ein regeneratives Vorwärmen des Kalksteins im Gegenstrom zu den heißen Abgasen.

Aus der EP 3 631 329 B1 ist zudem ein Verfahren bekannt, mit welchem die Stickoxide aus den Abgasen des GGR-Ofens entfernt werden können. Die EP 3 631 329 B1 sieht dafür eine Lösung vor, bei welcher die Abgase mit einer Heizung eigens auf die zur katalytischen Entstickung notwendigen Temperaturen aufgeheizt werden, anschließend eine Ammoniaklösung in die Abgase eingebracht wird und die Abgase danach einem katalytischen Filter zugeführt werden, mit welchem eine Filterung und SCR-Umsetzung der Abgase bewerkstelligt wird. Anschließend werden die Abgase über einen Ventilator durch eine Kaminleitung gefördert und schließlich über einen Kamin an die Umwelt abgegeben.

Aufgrund der schwankenden Abgastemperaturen macht das bekannte Verfahren jedoch nachteiligerweise eine aufwendige Regelung der Beheizung notwendig. Da die NOₓ-Konzentration im Abgas ebenfalls starken Schwankungen unterliegt, muss auch die Ammoniakeindüsung entsprechend geregelt werden, um sowohl eine weitgehend vollständige Reduktion der Stickoxide, sowie auch einen möglichst geringen Ammoniakschlupf sicherzustellen. Dafür werden die von verschiedenen Temperatur-, Schadstoff- und Durchflussmengen-Messsensoren erfassten Messwerte dazu herangezogen, einerseits mit der Heizung die Temperatur des Abgases vor dem katalytischen Filter und andererseits mit einem Dosiersystem die Menge der abgegebenen Ammoniaklösung zu regeln.

Darüber hinaus sind im Stand der Technik eine große Vielfalt alternativer Reinigungstechnologien für industrielle Abgase bekannt, welche jedoch bislang nicht auf die Besonderheiten des GGR-Ofens, insbesondere auf die schwankenden Abgastemperaturen, abgestimmt wurden.

Demnach liegt die Aufgabe der vorliegenden Erfindung darin, ein auf die Reinigung von Abgasen eines GGR-Ofens maßgeschneidertes Verfahren und eine damit ausgestattete Anlage zu entwickeln, mit welchen die beim Stand der Technik auftretenden Nachteile zumindest gelindert oder vermieden werden.

Diese Aufgabe wird durch eine Anlage nach Anspruch 1 und ein Verfahren nach Anspruch 12 gelöst. Bevorzugte Ausführungsformen der Erfindung sind in den abhängigen Ansprüchen angegeben.

Somit weist die erfindungsgemäße Anlage zum Brennen von Kalkstein (d.h. einem Sedimentgestein, das überwiegend aus Calciumcarbonat CaCO3 besteht) zu Branntkalk (Calciumoxid CaO) zumindest auf:
einen Gleichstrom-Gegenstrom-Regenerativ-(GGR)-Ofen mit einem ersten Ofenschacht und einem zweiten Ofenschacht, welche abwechselnd als Brennschacht zum Brennen von Rohmaterial und als Vorwärmschacht zum Vorwärmen von Rohmaterial betrieben werden, und mit einem Überströmkanal zwischen dem ersten und dem zweiten Ofenschacht, über welchen Abgase vom Brennschacht in den Vorwärmschacht überführt werden,
eine Abgas-Ableitung zum Ableiten von Abgasen des GGR-Ofens,
eine Abgas-Reinigungsstufe zum Reinigen der vom GGR-Ofen abgeleiteten Abgase, wobei die Abgas-Reinigungsstufe zur Pufferung von Schwankungen der Temperatur der Abgase des GGR-Ofens zumindest einen Regenerator zum regenerativen Wärmeaustausch mit den vom GGR-Ofen abgeleiteten Abgasen aufweist.

Beim erfindungsgemäßen Verfahren zum Brennen von Kalkstein zu Branntkalk werden zumindest die folgenden Schritte durchgeführt:
Betreiben eines Gleichstrom-Gegenstrom-Regenerativ-(GGR)-Ofens in einem ersten Betriebszustand, in welchem mit einem ersten Ofenschacht des GGR-Ofens Rohmaterial gebrannt und mit einem zweiten Ofenschacht des GGR-Ofens Rohmaterial vorgewärmt wird, wobei Abgase vom ersten Ofenschacht in den zweiten Ofenschacht überführt werden,
Betreiben des GGR-Ofens in einem zweiten Betriebszustand, in welchem mit dem zweiten Ofenschacht Rohmaterial gebrannt und mit dem ersten Ofenschacht Rohmaterial vorgewärmt wird, wobei Abgase vom zweiten Ofenschacht in den ersten Ofenschacht überführt werden,
Ableiten von Abgasen des GGR-Ofens, insbesondere vom zweiten Ofenschacht im ersten Betriebszustand und vom ersten Ofenschacht im zweiten Betriebszustand,
Reinigen, insbesondere Entsticken, der vom GGR-Ofen abgeleiteten Abgase mit einer Reinigungsstufe,
Regenerativer Wärmeaustausch zwischen den vom GGR-Ofen abgeleiteten Abgasen und einem Regenerator, wodurch im ersten und/oder zweiten Betriebszustand des GGR-Ofens auftretende Temperaturschwankungen der vom GGR-Ofen abgeleiteten Abgase gepuffert werden.

Für die Zwecke dieser Offenbarung beziehen sich die Orts- und Richtungsangaben, wie *"*oben*"*, *"*unten*"*, *"*horizontal*"*, *"*vertikal*"*, auf den bestimmungsgemäßen Gebrauchszustand der Anlage.

Durch das regelmäßige Umschalten zwischen dem ersten und dem zweiten Betriebszustand ergeben sich periodische Schwankungen von Volumenstrom, Temperatur und Schadstoffkonzentrationen der Abgase, welche vom jeweiligen Vorwärm- bzw. Abgasschacht abgezogen werden. Die Abgase können beim Ableiten aus dem GGR-Ofen eine durchschnittliche Temperatur von ca. 130 °C aufweisen. In der Reinigungsstufe werden die Abgase gereinigt. Weist die Reinigungsstufe eine SCR-Einheit auf, müssen die Abgase für die selektive katalytische Reduktion (SCR) von Stickoxiden (NOₓ) auf eine Temperatur von 280 bis 420 °C, beispielsweise im Wesentlichen auf 350 °C, gebracht werden.

Erfindungsgemäß weist die Abgas-Reinigungsstufe zumindest den Regenerator (d.h. einen Wärmeübertrager mit einer als Kurzzeit-Wärmespeicher dienenden Wärmespeichermasse) auf, welcher regenerativ Wärme mit den vom GGR-Ofen abgeleiteten Abgasen vor der Reinigung der Abgase austauscht. Der Regenerator weist als Wärmespeichermasse vorzugsweise ein keramisches Material auf. Beim Stand der Technik gemäß EP 3 631 329 B1 mussten die prozessbedingten Temperaturschwankungen des Kalkschachtofen-Abgases zur Gänze durch eine aufwendige Regelung der Aufheizung ausgeglichen werden, um eine einigermaßen konstante Temperatur im SCR-Katalysator und damit eine gleichmäßige Entstickung sicherzustellen. Diese rasch passierenden Schwankungen der Abgastemperatur werden erfindungsgemäß durch den regenerativen Wärmeaustausch der Abgase mit dem Regenerator abgepuffert. Ähnlich Kondensatoren in einem Stromkreis, die die Eigenschaft besitzen, Stromspitzen abzudämpfen, übt die Wärmespeichermasse des Regenerators bei einer SCR der Abgase eine gleichrichtende Wirkung auf den Temperaturverlauf in einem (oder mehreren) Entstickungs-Katalysatoren der Reinigungsstufe aus und dämpft analog dazu Temperaturschwankungen und -spitzen. Dieser Effekt tritt nicht nur bei der regenerativen SCR auf, sondern auch bei einer regenerativen thermischen bzw. katalytischen Oxidation (RTO bzw. RCO) der Abgase nach dem GGR-Ofen. Auch bei diesen Anwendungen schwächt die träge Wärmespeichermasse des Regenerators die Schwankungen im Temperaturverlauf wesentlich ab. Dadurch kann vorteilhafterweise eine (weiter unten näher beschriebene) Heizeinrichtung entlastet werden, mit welcher eine Aufheizung der Abgase durchgeführt werden kann.

Bei einer besonders bevorzugten Ausführungsform ist zumindest eine Rezirkulationsleitung zum Rezirkulieren zumindest eines Teils der Abgase von der Reingasseite zur Rohgasseite der Reinigungsstufe, insbesondere während des Beschickens des ersten und/oder zweiten Ofenschachts mit Rohmaterial, vorgesehen.

Wenn der GGR-Ofen, vorzugsweise in einer Zeit zwischen dem ersten und dem zweiten Betriebszustand, in einem Chargierbetriebszustand betrieben wird, können der erste und/oder der zweite Ofenschacht mit Rohmaterial beschickt werden. Über die Dauer des Chargierbetriebszustands kann der Volumenstrom der vom GGR-Ofen in die Reinigungsstufe abgeleiteten Abgase, vorzugsweise durch Abschalten einer Gasfördereinrichtung, insbesondere eines Ventilators, zumindest reduziert, insbesondere im Wesentlichen unterbrochen, werden. Während des Chargierbetriebszustands ist es günstig, wenn zumindest ein Teil der Abgase, insbesondere die gesamten Abgase, von der Reingasseite zur Rohgasseite der Reinigungsstufe rezirkuliert, d.h. für eine neuerliche Durchströmung der Reinigungsstufe zurückgeführt, werden. Wenn mit der Reinigungsstufe eine SCR der Abgase durchgeführt wird, kann unmittelbar nach Beendigung des Chargierbetriebszustands das Abgas aus dem GGR-Ofen mit der maximalen NOₓ-Fracht kommen, so dass beim Stand der Technik eine starke Aufheizung der Abgase samt einer sehr schnellen Regelung notwendig ist, um den Entstickungs-Katalysator sofort auf die nötige Temperatur für eine effektive Entstickung der Abgase bringen zu können. Wird diese Temperatur beim Stand der Technik nicht erreicht, so könnte es neben erhöhten Emissionen von NOₓ und NH₃ unter Umständen auch zu Ablagerungen von Ammoniumsulfat ((NH₄)₂SO₄) im Entstickungs-Katalysator kommen, wodurch dessen Lebensdauer verringert werden würde. Die Rezirkulation von der Reingasseite zur Rohgasseite (d.h. die Zurückführung des mit der Reinigungsstufe gereinigten Reingases für die erneute Durchströmung der Reinigungsstufe) ermöglicht es hingegen, einen Entstickungs-Katalysator der Reinigungsstufe während des Chargierbetriebszustands auf der für die Entstickung idealen Temperatur zu halten. Treten dabei nennenswerte Wärmeverluste auf, können diese durch Beheizung des rezirkulierten Abgases kompensiert werden. Zudem kann mit dem Reingas auch überschüssiges NH₃ rezirkuliert werden und hat somit Zeit, im Katalysator abzureagieren, wodurch auch der NH₃-Schlupf verringert werden kann. Kommt nach Beendigung des Chargierbetriebs wieder (mehr) Abgas samt erhöhtem NOₓ-Gehalt vom GGR-Ofen in die Reinigungsstufe, so erfährt das Abgas durch die Rezirkulation einen vorteilhaften Verdünnungseffekt.

Bei einer Ausführungsvariante ist die Rezirkulationsleitung durch eine Bypassleitung zur Umgehung der Reinigungsstufe gebildet, wobei die Bypassleitung von der Abgas-Ableitung abgezweigt und in eine Kaminleitung vor einem Kamin zur Abgabe der Abgase an die Umgebung der Anlage zurückgeführt ist. Diese Ausführungsform hat insbesondere den Vorteil, dass eine Bypass-Leitung zur Umgehung der Reinigungsstufe ohnehin vorhanden sein muss, um die Abgase in einem Bypassbetrieb, beispielsweise beim Anfahren der Reinigungsstufe, von der Ableitung selektiv an der Reinigungsstufe vorbei in die Kaminleitung zu führen und über den Kamin an die Umgebung abzugeben. Diese Bypass-Leitung kann in einem Rezirkulationsbetrieb dazu genutzt werden, die Abgase nach einem Durchströmen der Reinigungsstufe von der Kaminleitung über die Bypassleitung zurück in die Ableitung zu führen, woraufhin die Abgase ein weiteres Mal durch die Reinigungsstufe geführt werden. Diese Rezirkulation kann beliebig oft wiederholt werden. Im Rezirkulationsbetrieb durchströmen die Abgase die Bypassleitung in entgegengesetzter Richtung wie im Bypassbetrieb.

Bei einer weiteren Ausführungsvariante ist eine Rezirkulationsleitung von einer Ausgangsleitung der Reinigungsstufe zu einer Eingangsleitung der Reinigungsstufe zurückgeführt. Bei dieser Ausführung setzt die Rezirkulationsleitung vor der Abzweigung der Bypassleitung von der Kaminleitung in der Ausgangsleitung der Reinigungsstufe an und führt nach der Abzweigung der Bypassleitung von der Ableitung in die Eingangsleitung der Reinigungsstufe zurück.

Diese Ausführungsvariante hat den Vorteil, dass die Rezirkulationsleitung besonders kurz gehalten werden kann, wodurch bei der Verwendung der Bypass-Leitung für die Abgas-Rezirkulation eventuell auftretende Probleme, wie eine Beschädigung bzw. Korrosion der Bypass-Leitung aufgrund einer Taupunktunterschreitung des abkühlenden Abgases, eher vermieden werden können. Weiters kann eine gleichmäßige Durchströmung der Reinigungsstufe sichergestellt werden. Diese Ausführung der Rezirkulationsleitung eignet sich insbesondere in Verbindung mit einer elektrischen Heizeinrichtung der Reinigungsstufe, welche (anders als etwa eine Gasbeheizung) ohne Frischluftzufuhr auskommt.

Je nach Ausführung können auch zwei Rezirkulationsleitungen vorgesehen sein, wobei die eine Rezirkulationsleitung durch die Bypassleitung gebildet ist und die andere Rezirkulationsleitung von der Ausgangsleitung der Reinigungsstufe zu der Eingangsleitung der Reinigungsstufe zurückgeführt ist.

Die Vorteile des regenerativen Wärmeaustauschs der Abgase des GGR-Ofens können bei verschiedenen Ausführungen der Reinigungsstufe genutzt werden. Die Reinigungsstufe weist bei bevorzugten Anwendungen eine SCR-(Selektive Katalytische Reduktion)-Einheit und/oder eine RTO-(Regenerative Thermische Oxidation)-Einheit und/oder eine RCO-(Regenerative Katalytische Oxidation)-Einheit auf. Somit kann mit der Reinigungsstufe insbesondere eine SCR, eine RTO und/oder eine RCO der vom GGR-Ofen abgeleiteten Abgase durchgeführt werden. Diese Ausführungen sind an sich im Stand der Technik bekannt. Die Reinigungsstufe weist daher bevorzugt zumindest einen Katalysator, insbesondere einen Entstickungs-Katalysator und/oder einen Oxidations-Katalysator, auf.

Bei einer bevorzugten Ausführungsform weist die Reinigungsstufe einen ersten Kanal mit dem Regenerator, einen Verbindungsraum, insbesondere einen Kopfraum, und einen zweiten Kanal mit einem weiteren Regenerator auf, wobei eine Steuerung zur Durchströmung der Reinigungsstufe in alternierender Richtung vorgesehen ist.

Bei dieser Ausführungsform können die vom GGR-Ofen abgeleiteten Abgase je nach Schaltzustand der Steuerung in einem ersten Betriebsmodus in die eine Richtung und einem zweiten Betriebsmodus in die andere (entgegengesetzte) Richtung durch die Reinigungsstufe geführt werden. Bevorzugt weist der erste Kanal einen ersten Katalysator, insbesondere einen Entstickungs-Katalysator und/oder einen Oxidations-Katalysator, und der zweite Kanal einen zweiten Katalysator, insbesondere einen weiteren Entstickungs-Katalysator und/oder einen weiteren Oxidations-Katalysator, auf.

Bevorzugt ist der Verbindungsraum als Kopfraum ausgebildet, der in einem von 0 und 180 Grad verschiedenen Winkel, insbesondere im Wesentlichen im rechten Winkel, zum ersten und zweiten Kanal angeordnet ist. Dadurch sind Rohgaseintritt und Reingasaustritt in räumlicher Nähe zueinander angeordnet. Bevorzugt sind der erste und der zweite Kanal im Wesentlichen vertikal und der Kopfraum im Wesentlichen horizontal angeordnet. Je nach Ausführung kann auch ein dritter, insbesondere auch ein vierter und ein fünfter, Kanal vorgesehen sein, welcher über den Verbindungsraum mit dem ersten und dem zweiten Kanal verbunden ist.

In einer ersten Betriebsstellung kann der Regenerator zum Aufwärmen der Abgase vor dem ersten Katalysator und der weitere Regenerator zum Rückgewinnen der Wärme der gereinigten Rauchgase nach dem zweiten Katalysator dienen. Die Richtungsangaben beziehen sich hierbei auf die Strömungsrichtung der Abgase. Durch Umschalten der Strömungsrichtung werden die Funktionen der Regeneratoren vertauscht. In einer zweiten Betriebsstellung kann daher der weitere Regenerator zum Aufwärmen der Abgase vor dem zweiten Katalysator und der Regenerator zum Rückgewinnen der Wärme der gereinigten Rauchgase nach dem ersten Katalysator dienen. Somit kann ein quasikontinuierlicher Betrieb ermöglicht werden.

Zum Ausgleich von Verlusten des regenerativen Wärmeaustauschs ist es günstig, wenn der Verbindungsraum mit einer Heizeinrichtung, vorzugsweise mit einem Gasbrenner und/oder einer elektrischen Heizeinrichtung und/oder einer Einrichtung zum Einleiten eines Heißgasstromes, zum Aufheizen der Abgase verbunden ist. Somit können die Verluste der Wärmeverschiebung mit den Regeneratoren mit der Heizeinrichtung durch Beheizen der Abgase in dem Verbindungsraum zwischen dem ersten und dem zweiten Kanal ausgeglichen werden.

Bei einer bevorzugten Ausführungsform ist eine Reduktionsmittel-Zufuhr zur Zuführung eines Reduktionsmittels, insbesondere von Ammoniak, Harnstoff und/oder Ammonium, in die vom GGR-Ofen abgeleiteten Abgase, insbesondere zwischen den Regenerator und einen ersten Katalysator im ersten Kanal der Reinigungsstufe und/oder zwischen einen zweiten Katalysator und den weiteren Regenerator im zweiten Kanal der Reinigungsstufe, vorgesehen.

Bei einer bevorzugten Ausführungsform ist die Reduktionsmittel-Zufuhr mit einer Reduktionsmittel-Versorgungsleitung verbunden, welche einen Vorverdampfer für das Reduktionsmittel aufweist. In diesem Vorverdampfer wird das Reduktionsmittel (bevorzugt wässrige Ammoniak-, Ammonium- oder Harnstofflösung) insbesondere mit Sprühlanzen in ein Gas, vorzugsweise in ein von der Reinigungsstufe zurückgeführtes Abgas, eingedüst und, vorzugsweise im Wesentlichen vollständig, verdampft. Beim Einsatz von Harnstofflösung wird der Harnstoff dabei zersetzt und gasförmiger Ammoniak freigesetzt. Der Vorverdampfer ermöglicht es, das Reduktionsmittel in Gasform in die Reinigungsstufe einzubringen und so eine besonders gleichmäßige Verteilung desselben zu erreichen.

Bei einer bevorzugten Ausführungsform ist eine Abgas-Rückführung zur Rückführung von Abgasen, insbesondere vom Verbindungsraum zwischen dem ersten und dem zweiten Kanal der Reinigungsstufe, in die Versorgungsleitung für die Reduktionsmittel-Zufuhr vorgesehen ist. Somit können Abgase auch über die Abgas-Rückführung und die Versorgungsleitung rezirkuliert werden. Bei einer bevorzugten Ausführung kann der Entstickungs-Katalysator der Reinigungsstufe während des Chargierbetriebszustands, insbesondere am Ende des Chargierbetriebszustands, durch Rückführung der Abgase über die Versorgungsleitung mit NH₃ angereichert werden, um die zu Beginn des ersten bzw. zweiten Betriebszustands anfänglich hohe NOₓ-Fracht möglichst effektiv behandeln zu können.

Bei einer bevorzugten Ausführung umfasst das Verfahren auch die folgenden Schritte:
Vorverdampfen eines Reduktionsmittels, insbesondere von Ammoniak, Harnstoff und/oder Ammonium, mit einem Vorverdampfer in einer Reduktionsmittel-Versorgungsleitung,
Zuführung des Reduktionsmittels in die Reinigungsstufe, und
Rückführen von gereinigten Abgasen in die Reduktionsmittel-Versorgungsleitung, vorzugsweise während des Chargierbetriebszustands.

Wie im Stand der Technik an sich bekannt, weist der GGR-Ofen bevorzugt folgendes auf:
eine erste bzw. zweite Brennstoff-Zuführeinrichtung zum Zuführen von Brennstoff in den ersten bzw. zweiten Ofenschacht; und/oder
eine erste bzw. zweite Verbrennungsluft-Zuführeinrichtung zur Zufuhr von Verbrennungsluft in den ersten bzw. zweiten Ofenschacht;
eine erste bzw. zweite Abgas-Ableiteinrichtung zum Ableiten des Abgases vom ersten bzw. zweiten Ofenschacht in die Abgas-Ableitung; und/oder
eine erste bzw. zweite Kühlluft-Zuführeinrichtung zur Zufuhr von Kühlluft in die Kühlzone des ersten bzw. zweiten Ofenschachts.

Bei einer bevorzugten Ausführungsform ist ein Ofenfilter in der Abgas-Ableitung zwischen dem GGR-Ofen und der Reinigungsstufe zur Filterung der vom GGR-Ofen abgeleiteten Abgase vorgesehen. Nach dem Ofenfilter kann eine Gasfördereinrichtung, insbesondere ein Ventilator, in der Ableitung vorgesehen sein. Die oben beschriebene Bypass-Leitung kann nach der Gasfördereinrichtung abgezweigt sein. Nach der Abzweigung der Bypass-Leitung kann die Eingangsleitung in die Reinigungsstufe ansetzen. In der Ausgangsleitung nach der Reinigungsstufe kann eine weitere Gasfördereinrichtung, insbesondere ein weiterer Ventilator, vorgesehen sein. Die Ausgangsleitung ist mit der Bypassleitung zur Kaminleitung vereinigt, welche zu dem Kamin führt.

Gegenüber EP 3 631 329 B1 hat die oben beschriebene Ausführung den Vorteil der Nachrüstbarkeit bei Weiterverwendung des bestehenden Ofenfilters. Ein solches Filter zur Entstaubung des Abgases ist bei Kalkschachtöfen bereits weltweiter Standard und somit ein integraler Bestandteil der bestehenden Abgasreinigung. Da EP 3 631 329 B1 einen katalytischen Filter verwendet, kann der bestehende Filter bei diesem bekannten Verfahren nicht weiterverwendet werden, sondern muss ausgetauscht werden.

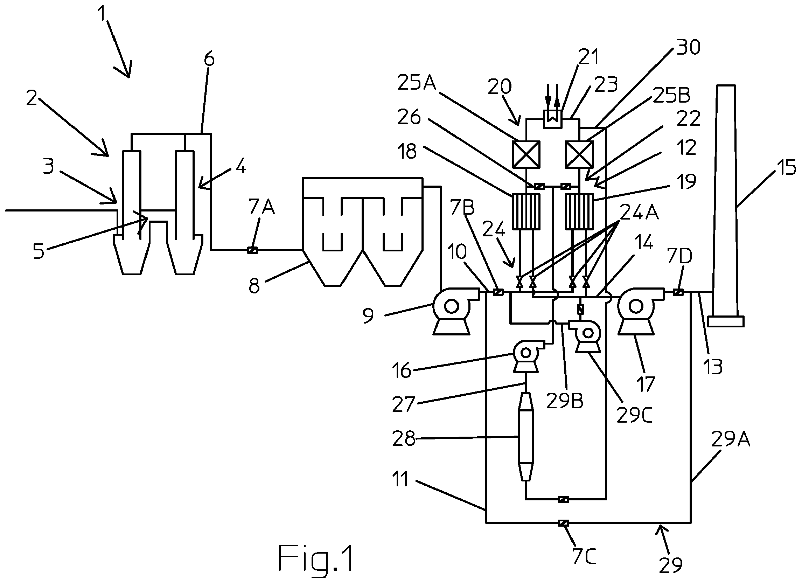

Fig. 1 zeigt eine erfindungsgemäße Ausführung einer Anlage zum Brennen von Calciumcarbonat zu Calciumoxid.

Fig. 1 zeigt eine Anlage 1 zum Brennen von Calciumcarbonat (Kalkstein) zu Calciumoxid (Branntkalk). Die Anlage 1 weist einen Gleichstrom-Gegenstrom-Regenerativ-(GGR)-Ofen 2 mit einem ersten Ofenschacht 3 und mit einem zweiten Ofenschacht 4 auf. Je nach Ausführung können auch weitere Ofenschächte vorgesehen sein (nicht gezeigt), welche entsprechend dem ersten 3 bzw. zweiten Ofenschacht 4 ausgebildet sind. Der erste Ofenschacht 3 und der zweite Ofenschacht 4 sind zeitlich abwechselnd als Brennschacht zum Brennen von Rohmaterial, hier einer Kalkschüttung, und als Vorwärmschacht zum Vorwärmen von solchem Rohmaterial betreibbar sind. Somit wird der GGR-Ofen 2 mit einer bestimmten Frequenz zwischen einem ersten Betriebszustand, in welchem der erste Ofenschacht 3 als Brennschacht und der zweite Ofenschacht 4 als Vorwärmschacht betrieben wird, und einem zweiten Betriebszustand, in welchem der zweite Ofenschacht 4 als Brennschacht und der erste Ofenschacht 3 als Vorwärmschacht betrieben wird, umgeschaltet. Der GGR-Ofen 2 weist einen Abgas-Überströmkanal 5 auf, welcher den ersten Ofenschacht 3 mit dem zweiten Ofenschacht 4 verbindet, so dass Abgase vom Brennschacht in den Vorwärmschacht überführt werden können. Den oberen Bereichen des ersten 3 bzw. zweiten Ofenschachts 4 des GGR-Ofens 2 wird das Rohmaterial zugeführt. Das fertig gebrannte Material wird in den unteren Bereichen des ersten 3 bzw. zweiten Ofenschachts 4 abgezogen. Um das Brennen des Rohmaterials zu erreichen, wird dem ersten 3 bzw. zweiten Ofenschacht 4 ein Brennstoff zugeführt. Weiters wird Verbrennungsluft von oben in ersten 3 bzw. zweiten Ofenschacht 4 zugeleitet. Von unten wird Kühlluft in den ersten 3 bzw. zweiten Ofenschacht 4 geleitet, um den gebrannten Kalk zu kühlen.

Im jeweiligen Brennschacht bilden sich, von oben nach unten, eine Vorwärmzone, eine Brennzone und eine Kühlzone aus. Die Verbrennungsluft durchströmt den Brennschacht von oben nach unten und somit im Gleichstrom mit dem Rohmaterial. Die Abgase des Brennschachts werden über den Überstromkanal 5 in den Vorwärmschacht überführt, in welchem die Abgase von unten nach oben und somit im Gegenstrom zu dem Rohmaterial strömen. Dabei wird das Rohmaterial im Vorwärmschacht für den nächsten Brennvorgang vorgewärmt. Nach dem Durchströmen des Rohmaterials im Vorwärmschacht werden die Abgase über eine Ableitung 6 vom GGR-Ofen 2 abgeführt. Ist das vorgegebene Zeitintervall vergangen, wird der Betriebszustand des GGR-Ofens 2 gewechselt. Dafür wird die Verbrennungsluft- und Brennstoffzufuhr in den bisher als Brennschacht betriebenen Ofenschacht unterbrochen, wohingegen die Verbrennungsluft- und Brennstoffzufuhr in den bisher als Vorwärmschacht betriebenen Ofenschacht aktiviert wird. Beispielsweise kann alle 10 bis 15 Minuten (min) zwischen dem ersten und dem zweiten Betriebszustand gewechselt werden.

Zwischen einem Betrieb der Anlage 1 im ersten und im zweiten Betriebszustand, d.h. zwischen zwei Brennvorgängen, wird jeweils zumindest einer von erstem Ofenschacht 3 und zweitem Ofenschacht 4 über eine Rohmaterial-Zufuhreinrichtung (nicht gezeigt) mit Rohmaterial beschickt. Dieser Chargierbetriebszustand kann beispielsweise 30 bis 40 Sekunden (s) dauern.

Wie aus Fig. 1 ersichtlich, wird das Abgas über den zweiten Ofenschacht 4 (im ersten Betriebszustand des GGR-Ofens 2) bzw. über den ersten Ofenschacht 3 (im zweiten Betriebszustand des GGR-Ofens 2) in die Ableitung 6 abgeleitet. In der Ableitung 6 strömt das Abgas über eine öffenbare Absperreinrichtung 7A, insbesondere eine Klappe, in ein Ofenfilter 8, welches in der gezeigten Ausführung beispielsweise zumindest ein Schlauchfilter aufweisen kann. Mit dem Ofenfilter 8 kann der Staubgehalt der Abgase reduziert werden. In der gezeigten Ausführung werden die Abgase mit einer Gasfördereinrichtung 9, insbesondere einem Ventilator, entlang der Ableitung 6 vom GGR-Ofen 2 weggeführt. Die Gasfördereinrichtung 9 kann unmittelbar nach dem Ofenfilter 8 angeordnet sein. In dieser Offenbarung bezieht sich "vor" und "nach" stets auf die Strömungsrichtung der Abgase des GGR-Ofens 2.

Wie aus Fig. 1 weiters ersichtlich, verzweigt sich die Ableitung 6 nach der Gasfördereinrichtung 9 in eine Reinigungsstufen-Eingangsleitung 10 und eine Bypassleitung 11. Die Reinigungsstufen-Eingangsleitung 10 führt über eine weitere öffenbare Absperreinrichtung 7B zu einer Abgas-Reinigungsstufe 12, welche weiter unten näher beschrieben wird. Die Bypassleitung 11 verläuft parallel zur Abgas-Reinigungsstufe 12, so dass in einem Bypassbetrieb selektiv durch die Bypassleitung 11 geführtes Abgas die Reinigungsstufe 12 nicht passiert. Die Bypassleitung 11 wird mit einer von der Abgas-Reinigungsstufe 12 wegführenden Reinigungsstufen-Ausgangsleitung 14 zu einer Kaminleitung 13 vereinigt, mit welcher die Abgase einem Kamin 15 zugeführt werden. In der Bypassleitung 11 ist eine weitere öffenbare Absperreinrichtung 7C, insbesondere eine Klappe, angeordnet, mit welcher die Durchströmung der Bypassleitung 11 abgesperrt werden kann. In der Reinigungsstufen-Ausgangsleitung 14 ist eine weitere öffenbare Absperreinrichtung 7D, insbesondere eine Klappe, angeordnet, mit welcher die Strömung des Abgases selektiv freigegeben bzw. abgesperrt werden kann. Die weitere öffenbare Absperreinrichtung 7D in der Reinigungsstufen-Ausgangsleitung 14 ist in der gezeigten Ausführung nach einer weiteren Gasfördereinrichtung 17, insbesondere einem Ventilator, angeordnet. Je nach Ausführung kann nur eine der beiden Gasfördereinrichtungen 9, 17 oder es können beide der Gasfördereinrichtungen 9, 17 vorgesehen sein.

Wie aus Fig. 1 ersichtlich, weist die Abgas-Reinigungsstufe 12 zumindest einen Regenerator 18 und einen weiteren Regenerator 19 auf, welche jeweils für einen regenerativen Wärmeaustausch mit den Abgasen des GGR-Ofens 2 eingerichtet sind. Durch den regenerativen Wärmeaustausch können im Betrieb auftretende Schwankungen der Temperatur der Abgase des GGR-Ofens 2 gepuffert, d.h. zumindest teilweise ausgeglichen, werden.

In dem Ausführungsbeispiel der Fig. 1 weist die Reinigungsstufe 12 einen ersten Kanal 20 mit dem Regenerator 18 und einen zweiten Kanal 22 mit dem weiteren Regenerator 19 auf, welche über einen Verbindungsraum 23, hier als Kopfraum ausgeführt, miteinander verbunden sind. Der erste Kanal 20 und der zweite Kanal 22 sind vorzugsweise parallel zueinander angeordnet. Im gezeigten Beispiel erstrecken sich der erste Kanal 20 und der zweite Kanal 22 jeweils in vertikaler Richtung. Der Verbindungsraum 23 erstreckt sich quer zum ersten Kanal 20 und zweiten Kanal 22. Im gezeigten Beispiel erstreckt sich der Verbindungsraum 23 in horizontaler Richtung. Weiters ist eine Steuerung 24 mit Steuerorganen 24A, insbesondere Ventilen, vorzugsweise Tellerventilen, oder Klappen, zur Durchströmung der Reinigungsstufe 12 je nach Schaltzustand in alternierender Richtung vorgesehen.

In einem ersten Schaltzustand der Steuerung 24 strömt das Abgas vom ersten Kanal 20 über den Verbindungsraum 23 in den zweiten Kanal 22. Dabei wird mit dem Regenerator 18 das Abgas aufgewärmt, wobei sich der Regenerator 18 abkühlt. Mit dem weiteren Regenerator 19 wird das Abgas abgekühlt, wobei sich der zweite Regenerator 19 aufheizt. In einem zweiten Schaltzustand der Steuerung 24 strömt das Abgas vom zweiten Kanal 22 über den Verbindungsraum 23 in den ersten Kanal 20. Dabei wird mit dem weiteren Regenerator 19 das Abgas aufgewärmt, wobei sich der weitere Regenerator 19 abkühlt. Mit dem Regenerator 18 wird das Abgas abgekühlt, wobei sich der Regenerator 18 aufheizt. Periodisch wird die Durchströmungsrichtung der Reinigungsstufe 12 mit Hilfe der Steuerung 24 umgedreht.

In dem Ausführungsbeispiel der Fig. 1 ist der Verbindungsraum 23 mit einer Heizeinrichtung 21, vorzugsweise mit einem Gasbrenner und/oder einer elektrischen Heizeinrichtung, zum Aufheizen der Abgase zwischen dem ersten Kanal 20 und dem zweiten Kanal 22 verbunden. Mit der Heizeinrichtung 21 können die Verluste des regenerativen Wärmeaustauschs der Abgase mit dem Regenerator 18 und mit dem weiteren Regenerator 19 ausgeglichen werden.

In dem Ausführungsbeispiel der Fig. 1 ist als Abgas-Reinigungsstufe 12 eine SCR-Selektive Katalytische Reduktion)-Einheit vorgesehen, mit welcher die in den Abgasen enthaltenen Stickoxide durch selektive katalytische Entstickung zersetzt werden können. Dafür ist im ersten Kanal 20 ein erster Entstickungs-Katalysator 25A und im zweiten Kanal 22 ist ein zweiter Entstickungs-Katalysator 25B vorgesehen. Mit einer Reduktionsmittel-Zufuhr 26 wird ein Reduktionsmittel, insbesondere Ammoniak, Harnstoff und/oder Ammonium, in die Reinigungsstufe 12, selektiv an einer ersten Stelle zwischen dem ersten Katalysator 24 und dem Regenerator 18 im ersten Kanal 20 und/oder an einer zweiten Stelle zwischen dem zweiten Katalysator 25 und dem weiteren Regenerator 19 im zweiten Kanal 22, abgegeben. Die Reduktionsmittel-Zufuhr 26 ist mit einer Reduktionsmittel-Versorgungsleitung 27 verbunden, in welcher ein Vorverdampfer 28 zum Vorverdampfen des Reduktionsmittels vor dem Einbringen des Reduktionsmittels in die Abgase angeordnet ist. Die Strömung durch die Reduktionsmittel-Versorgungsleitung 27 wird mit einer weiteren Gasfördereinrichtung 16 bewerkstelligt.

In dem Chargierbetriebszustand, d.h. beim Beschicken des GGR-Ofens 2 mit Rohmaterial, wird zumindest ein Teil der Abgase, vorzugsweise der gesamte Abgasstrom, von der Reingasseite zurück zur Rohgasseite rezirkuliert, so dass mit der Reinigungsstufe 12 gereinigte Abgase neuerlich durch die Reinigungsstufe 12 geführt werden. Im Chargierbetriebszustand wird daher eine Kreisströmung der gereinigten Abgase durch die Reinigungsstufe 12 vorgesehen.

Zu diesem Zweck ist zumindest eine Rezirkulationsleitung 29 zum Rezirkulieren zumindest des Teils der Abgase von der Reingasseite zur Rohgasseite der Reinigungsstufe 12 vorgesehen.

Bei einer ersten Ausführungsvariante ist als erste Rezirkulationsleitung 29A die Bypassleitung 11 vorgesehen, welche bei herkömmlichen Anlagen bereits vorhanden ist, dort aber lediglich zur Umgehung der Reinigungsstufe 12 dient. Diese Bypassleitung 11 kann nun in der gezeigten Ausführung dazu genutzt werden, die Abgase nach dem Passieren der Reinigungsstufe 12 über die Bypassleitung 11 zur Reinigungsstufen-Eingangsleitung 10 zurückzuführen. In diesem Rezirkulationsbetrieb strömen die Abgase in die umgekehrte Richtung durch die Bypassleitung 11 wie im Bypassbetrieb, in welchem die Abgase, beispielsweise beim Anfahren der Reinigungsstufe 12, unter Umgehung der Reinigungsstufe 12 zum Kamin 15 geleitet werden.

Bei einer weiteren Ausführungsvariante zweigt eine optionale zweite Rezirkulationsleitung 29b mit einer weiteren Gasfördereinrichtung 29C nicht wie die Bypassleitung 11 vom Ende der Reinigungsstufen-Ausgangsleitung 14, sondern von einem Anfangs- oder Mittelabschnitt der Reinigungsstufen-Ausgangsleitung 14 ab und führt in einen mittleren oder Endabschnitt der Reinigungsstufen-Eingangsleitung 10 zurück. In der gezeigten Ausführung ist die zweite Rezirkulationsleitung 29b vor der Gasfördereinrichtung 17 in der Reinigungsstufen-Ausgangsleitung 14 abgezweigt und nach der öffenbaren Absperreinrichtung 7B in die Reinigungsstufen-Eingangsleitung 10 zurückgeführt. Diese zweite Rezirkulationsleitung 29b ist bei herkömmlichen Anlagen nicht vorhanden.

Wie aus Fig. 1 ersichtlich, kann zudem eine Abgas-Rückführung 30 zur Rückführung von Abgasen aus dem Verbindungsraum 23 zwischen dem ersten 20 und dem zweiten Kanal 22 der Reinigungsstufe 11 in die Versorgungsleitung 27 für die Reduktionsmittel-Zufuhr 26 vorgesehen sein.

### Bezugsziffern:

1 Anlage
2 GGR-Ofen
3 erster Ofenschacht
4 zweiter Ofenschacht
5 Überströmkanal
6 Ableitung
7A-D öffenbare Absperreinrichtungen
8 Ofenfilter
9 Gasfördereinrichtung vor der Abzweigung der Bypassleitung
10 Reinigungsstufen-Eingangsleitung
11 Bypassleitung
12 Reinigungsstufe
13 Kaminleitung
14 Reinigungsstufen-Ausgangsleitung
15 Kamin
16 Gasfördereinrichtung in der Versorgungsleitung
17 Gasfördereinrichtung in der Ausgangsleitung
18 Regenerator
19 weiterer Regenerator
20 erster Kanal
21 Heizeinrichtung
22 zweiter Kanal
23 Verbindungsraum
24 Steuerung
24A Ventile
25A erster Entstickungs-Katalysator
25B zweiter Entstickungs-Katalysator
26 Reduktionsmittel-Zufuhr
27 Reduktionsmittel-Versorgungsleitung
28 Vorverdampfer
29 Rezirkulationsleitung
29A erste Rezirkulationsleitung
29b zweite Rezirkulationsleitung
29C Gasfördereinrichtung in der zweiten Rezirkulationsleitung
30 Abgas-Rückführung

## Patentansprüche

1. Anlage (1) zum Brennen von Kalkstein zu Branntkalk, aufweisend:
einen Gleichstrom-Gegenstrom-Regenerativ-(GGR)-Ofen (2) mit zumindest einem ersten Ofenschacht (3) und einem zweiten Ofenschacht (4), welche abwechselnd als Brennschacht zum Brennen von Rohmaterial und als Vorwärmschacht zum Vorwärmen von Rohmaterial betreibbar sind, und mit einem Überströmkanal (5) zwischen dem ersten (3) und dem zweiten Ofenschacht (4), über welchen Abgase vom Brennschacht in den Vorwärmschacht überführbar sind,
eine Abgas-Ableitung (6) zum Ableiten von Abgasen des GGR-Ofens,
eine Abgas-Reinigungsstufe (12) zum Reinigen der vom GGR-Ofen abgeleiteten Abgase,
**dadurch gekennzeichnet, dass**
die Abgas-Reinigungsstufe (12) zur Pufferung von Schwankungen der Temperatur der Abgase des GGR-Ofens (2) zumindest einen Regenerator (18) zum regenerativen Wärmeaustausch mit den vom GGR-Ofen (2) abgeleiteten Abgasen aufweist.

2. Anlage (1) nach Anspruch 1, **dadurch gekennzeichnet, dass** zumindest eine Rezirkulationsleitung (29; 29A, 29B) zum Rezirkulieren zumindest eines Teils der Abgase von der Reingasseite zur Rohgasseite der Reinigungsstufe (12), insbesondere in einem Chargierbetriebszustand beim Beschicken des ersten (3) und/oder des zweiten Ofenschachts (4) mit Rohmaterial, vorgesehen ist.

3. Anlage (1) nach Anspruch 2, **dadurch gekennzeichnet, dass** als Rezirkulationsleitung (29A) eine Bypassleitung (11) zur Umgehung der Reinigungsstufe (12) vorgesehen ist, wobei die Bypassleitung (11) von der Abgas-Ableitung (6) abgezweigt und in eine Kaminleitung vor einem Kamin (15) zur Abgabe der Abgase an die Umgebung der Anlage (1) zurückgeführt ist.

4. Anlage (1) nach Anspruch 2, **dadurch gekennzeichnet, dass** die Rezirkulationsleitung (29B) von einem Ausgang der Reinigungsstufe (12) zu einem Eingang der Reinigungsstufe (12) zurückgeführt ist.

5. Anlage (1) nach einem der Ansprüche 1 bis 4, **dadurch gekennzeichnet, dass** die Reinigungsstufe (12) einen ersten Kanal (20) mit dem Regenerator (18), einen Verbindungsraum (23), insbesondere einen Kopfraum, und einen zweiten Kanal (22) mit einem weiteren Regenerator (19) aufweist, wobei eine Steuerung (24) zur Durchströmung der Reinigungsstufe (12) in alternierender Richtung vorgesehen ist.

6. Anlage (1) nach Anspruch 5, **dadurch gekennzeichnet, dass** der Verbindungsraum (23) mit einer Heizeinrichtung (21), vorzugsweise mit einem Gasbrenner und/oder einer elektrischen Heizeinrichtung (21) und/oder einer Einrichtung zum Einleiten eines Heißgasstromes, zum Aufheizen der Abgase verbunden ist.

7. Anlage (1) nach einem der Ansprüche 1 bis 6, **dadurch gekennzeichnet, dass** die Reinigungsstufe (12) eine SCR-(Selektive Katalytische Reduktion)-Einheit und/oder eine RTO-(Regenerative Thermische Oxidation)-Einheit und/oder eine RCO-(Regenerative Katalytische Oxidation)-Einheit aufweist.

8. Anlage (1) nach einem der Ansprüche 1 bis 7, **dadurch gekennzeichnet, dass** eine Reduktionsmittel-Zufuhr (26) zur Zuführung eines Reduktionsmittels, insbesondere von Ammoniak, Harnstoff und/oder Ammonium, in die vom GGR-Ofen abgeleiteten Abgase, insbesondere zwischen einen ersten Katalysator (25A) und den Regenerator (18) im ersten Kanal (20) der Reinigungsstufe (12) und/oder zwischen einen zweiten Katalysator (25B) und den weiteren Regenerator (19) im zweiten Kanal (22) der Reinigungsstufe (12), vorgesehen ist.

9. Anlage (1) nach Anspruch 8, **dadurch gekennzeichnet, dass** die Reduktionsmittel-Zufuhr (26) mit einer Reduktionsmittel-Versorgungsleitung (27) verbunden ist, welche einen Vorverdampfer (28) für das Reduktionsmittel aufweist.

10. Anlage (1) nach Anspruch 8 oder 9, **dadurch gekennzeichnet, dass** eine Abgas-Rückführung (30) zur Rückführung von Abgasen, insbesondere vom Verbindungsraum (23) zwischen dem ersten (20) und dem zweiten Kanal (22) der Reinigungsstufe (12), in die Versorgungsleitung (27) für die Reduktionsmittel-Zufuhr (26) vorgesehen ist.

11. Anlage (1) nach einem der Ansprüche 1 bis 10, **gekennzeichnet durch**
einen Ofenfilter (8) in der Abgas-Ableitung (6) zwischen dem GGR-Ofen (2) und der Reinigungsstufe (12) zur Filterung der vom GGR-Ofen (2) abgeleiteten Abgase.

12. Verfahren zum Brennen von Kalkstein zu Branntkalk, mit den Schritten:
Betreiben eines Gleichstrom-Gegenstrom-Regenerativ-(GGR)-Ofens (2) in einem ersten Betriebszustand, in welchem mit einem ersten Ofenschacht (3) des GGR-Ofens (2) Rohmaterial gebrannt und mit einem zweiten Ofenschacht (4) des GGR-Ofens (2) Rohmaterial vorgewärmt wird, wobei Abgase vom ersten Ofenschacht (3) in den zweiten Ofenschacht (4) überführt werden,
Betreiben des GGR-Ofens (2) in einem zweiten Betriebszustand, in welchem mit dem zweiten Ofenschacht (4) Rohmaterial gebrannt und mit dem ersten Ofenschacht (3) Rohmaterial vorgewärmt wird, wobei Abgase vom zweiten Ofenschacht (4) in den ersten Ofenschacht (3) überführt werden,
Ableiten von Abgasen des GGR-Ofens (2),
Reinigen, insbesondere Entsticken, der vom GGR-Ofen (2) abgeleiteten Abgase mit einer Reinigungsstufe (12),
**gekennzeichnet durch**
Regenerativen Wärmeaustausch zwischen den vom GGR-Ofen (2) abgeleiteten Abgasen und einem Regenerator (18), wodurch im ersten und/oder zweiten Betriebszustand des GGR-Ofens (2) auftretende Temperaturschwankungen der vom GGR-Ofen (2) abgeleiteten Abgase gepuffert werden.

13. Verfahren nach Anspruch 12, **gekennzeichnet durch** Betreiben des GGR-Ofens in einem Chargierbetriebszustand, in welchem der erste (3) und/oder der zweite Ofenschacht (4) mit Rohmaterial beschickt wird, wobei der Volumenstrom der vom GGR-Ofen (2) in die Reinigungsstufe (12) abgeleiteten Abgase während des Chargierbetriebszustands, vorzugsweise durch Abschalten einer Gasfördereinrichtung (7), insbesondere eines Ventilators, zumindest reduziert, insbesondere im Wesentlichen unterbrochen, wird.

14. Verfahren nach Anspruch 12 oder 13, **gekennzeichnet durch** Rezirkulieren zumindest eines Teils der Abgase von der Reingasseite zur Rohgasseite der Reinigungsstufe (12), vorzugsweise während des Chargierbetriebszustands.

15. Verfahren nach einem der Ansprüche 12 bis 14, **gekennzeichnet durch**
Vorverdampfen eines Reduktionsmittels, insbesondere von Ammoniak, Harnstoff und/oder Ammonium, mit einem Vorverdampfer (28) in einer Reduktionsmittel-Versorgungsleitung,
Zuführung des Reduktionsmittels in die Reinigungsstufe (12), und
Rückführen von gereinigten Abgasen in die Reduktionsmittel-Versorgungsleitung.
